(19) **Europäisches Patentamt**
**European Patent Office**
**Office européen des brevets**

(11) **EP 1 378 855 B1**

(12) **EUROPEAN PATENT SPECIFICATION**

(45) Date of publication and mention
of the grant of the patent:
**17.10.2007 Bulletin 2007/42**

(51) Int Cl.:
*G06K 9/62* (2006.01)     *G06N 3/08* (2006.01)

(21) Application number: **02018068.3**

(22) Date of filing: **13.08.2002**

(54) **Exploiting ensemble diversity for automatic feature extraction**

Benutzung von Gruppendiversität zur automatischen Bestimmung von Merkmalen

Utilisation de la diversité d'ensemble pour l'extraction automatique de caractéristiques

(84) Designated Contracting States:
**DE FR GB**

(30) Priority: **05.07.2002 EP 02015105**

(43) Date of publication of application:
**07.01.2004 Bulletin 2004/02**

(73) Proprietor: **Honda Research Institute Europe GmbH**
**63073 Offenbach/Main (DE)**

(72) Inventors:
• **Yao, Xin, Prof. Dr.,**
**School of Computer Science**
**Birmingham B 15 2TT (GB)**
• **Brown, Gavin,**
**c/o School of Computer Science**
**Birmingham B 15 2TT (GB)**
• **Sendhoff, Bernhard,**
**Honda R&D Europe (Deutschland)**
**63073 Offenbach/Main (DE)**
• **Wersing, Heiko,**
**Honda R&D Europe (Deutschland)GmbH**
**63073 Offenbach/Main (DE)**

(74) Representative: **Rupp, Christian et al**
**Mitscherlich & Partner**
**Patent- und Rechtsanwälte**
**Sonnenstrasse 33**
**80331 München (DE)**

(56) References cited:
DE-A1- 10 048 308      US-A- 5 546 503
US-A- 5 926 804

• QIANGFU ZHAO: "A co-evolutionary algorithm for neural network learning" NEURAL NETWORKS,1997., INTERNATIONAL CONFERENCE ON HOUSTON, TX, USA 9-12 JUNE 1997, NEW YORK, NY, USA,IEEE, US, vol. 1, 9 June 1997 (1997-06-09), pages 432-437, XP010238862 ISBN: 0-7803-4122-8
• BROWN, G. YAO, X.: "On the Effectiveness of Negative Correlation Learning" PROC. FIRST UK WORKSHOP ON COMPUTATIONAL INTELLIGENCE (UKCI'01), September 2001 (2001-09), pages 57-62, XP002370022 Edinburgh, Scotland

EP 1 378 855 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

The present invention proposes an automatic method, based on a neural network ensemble, for extracting multiple, diverse and complementary sets of useful classification features from high-dimensional data. The advantage these diverse representations for an image dataset lies in a good classification accuracy and a high degree of dimensionality reduction.

The automatic feature extraction according to the present invention can find application as a pre-processing step in signal processing architectures (f.e. in the field of pattern recognition) and be implemented by hardware and/or software.

*Prior Art References*

The following known techniques will be acknowledged later on:

[1] A. Sharkey. Multi-Net Systems, chapter Combining Artificial Neural Nets: Ensemble and Modular Multi-Net Systems, p. 1-30, Springer Verlag, 1999.

[2] T.G. Dieterich. Ensemble methods in machine learning. In Proceedings of 1st Int. Workshop on Multiple Classifier Systems, p.1-15, 2000.

[3] S.Geman, E. Bienenstock and R. Doursat. Neural networks and the bias/variance dilemma. Neural Computation, 4:1-58, 1992.

[4] A. Krogh and J. Vedelsby. Neural network ensembles, cross validation and active learning. NIPS 7, 1995.

[5] N.Ueda and R.Nakano. Generalisation error of ensemble estimators. In ICNN96, p. 90-95, 1996.

[6] D.Opitz and J.Shavlik. Generate accurate and diverse members of a neural network ensemble. NIPS 8, 1996.

[7] Y.Liu. Negative Correlation Learning and Evolutionary Neural Network Ensembles. PAD Thesis, The University of New South Wales, Canberra, Australia, 1998.

[8] H.Wersing and E.Korner. Unsupervised learning of combination features for hierarchical recognition models. ICANN 2002, 2002.

[9] M. Kendall. Multivariate Analysis. Charles Griffin&Co., 1975.

[10] P. Comon. Independent Component Analysis - A New Concept ? Signal Processing, 36:287-314, 1994.

*Background of the invention*

Ensemble Learning:

Neural network ensembles offer a number of advantages over a single neural network system. They have the potential for improved generalization, lower dependence on the training set, and reduced training time. Sharkey [1] provides a summary of the literature up to 1998, while Dieterich [2] summarises up to 2000.

Training a neural network generally involves a delicate balance of various factors. The bias-variance decomposition [3] states that the mean square error of an estimator (in our case, a neural network) is equal to the bias squared plus the variance. There is a trade-off here - with more training, it is possible to achieve lower bias, but at the cost of a rise in variance. Krogh and Vedelsby [4] extend this concept to ensemble errors, showing how the bias can be seen as the extent to which the averaged output of the ensemble members differs from the target function, and the variance is the extent to which the ensemble members disagree. Ueda and Nakano [5] further provide a detailed proof of how the decomposition can be extended to bias-variance-covariance. From this result, one way to decrease the error is clear: decrease the covariance, ideally making it strongly negative - though too large a decrease in covariance can cause a rise in bias and variance. This means that an ideal ensemble consists of highly correct classifiers that disagree as much as possible (balancing the covariance against the bias and variance), empirically verified by Opitz and Shavlik [6] among others. Such an idea has also been shown using rule-based systems in an evolutionary context, demonstrating the generality of the idea and its associated techniques.

Negative correlation (NC) learning [7] is an efficient ensemble training method which can easily be implemented on top of standard backpropagation in feedforward networks. It incorporates a measure of ensemble diversity into the error function of each network: thus each network not only decreases its error on the function, but also increases its diversity from other network errors. The procedure has the following form: take a set of neural networks and a training pattern set, each pattern in the set is presented and backpropagated on, simultaneously, by the networks.

In NC-learning, the error function is a combination of the standard mean squared error and the negative correlation term:

$$\frac{1}{2}(F_i(n) - d(n))^2 + \lambda p_i(n),$$

$$\text{where } p_i(n) \text{ is}$$

$$(F_i(n) - F(n)) \sum_{j \neq i} (F_j(n) - F(n)),$$

In the above formula, $F_i(n)$ is the output of network i on pattern n and d(n) is the desired response for that pattern.

Each network receives lower error for moving its response closer to the target response, and away from the mean response of all the other networks - this is a trade-off, controlled by the penalty strength parameter, X. When $\lambda$=0.0, the networks ignore the other errors, and this is termed independent training, equivalent to not using NC at all. Previous work has shown the effectiveness of this technique under different circumstances.

Feature extraction and analysis

Automatic feature extraction is an essential pre-processing step in many signal processing architectures. Normally its main purpose is to perform a dimension reduction of a high-dimensional input which may e.g. be obtained from image or audio signals. Standard methods in this field are principal component analysis (PCA)[9] which detects features based on maximizing variance in the data and independent component analysis (ICA) which determines features, that are maximally statistically independent [10]. These feature transforms are based on a linear generative model and therefore detect features using a linear transformation. For the case of nonlinear feature extraction, no generally accepted methods with a similar wide application range as PCA and ICA exist.

German laying open publication DE 100 48 308 A1 discloses a device and a method for classifying objects from image data in the form of pixel patterns. The method is defined by feeding image data into a first neural network whose hidden layer comprises substantially less processing units than the input layer, wherein the processing units of the second layer deliver a correspondingly reduced number of feature data, feeding the feature data into a second neural network whose layer comprises substantially more processing units as the input layer, wherein the processing units of this layer produce reconstructed image data, and choosing the weights of the neural networks by training such that the reconstructed image data corresponds to the input image data as far as possible.

US patent 5, 926,804 discloses a discriminant neural network and a method of training the network. The network includes a set of hidden nodes having associated weights, and the number of hidden nodes is minimized by a training method including the steps of loading a training data set and assigning it to a residual data set, computing a vector associated with a first hidden node using the residual data set, projecting training data onto a hyperplane associated with said first hidden node, determining the number and locations of hard-limiter thresholds associated with the first node and repeating these steps for successive hidden nodes after removing satisfied subsets from the training data until all partitioned regions of the input data space are satisfied.

In view of the above prior art it is the object of the present invention to propose an improved technique for extracting sets of useful classification features from high-dimensional data based on a neural network ensemble.

This object it achieved by means of the features of the independent claims. The dependent claims develop further the central idea of the present invention.

According to one aspect of the present invention a method for automatically extracting features from images is proposed, the method comprising the following steps:

- training a neural system to achieve a low classification rate on a set of pre-defined images, the neural system consisting of an ensemble of neural networks, comprising multi-layer networks, the training resulting in a diverse neural network ensemble with differing hidden nodes of the multi-layer networks,
- extracting the hidden nodes from all hidden layers of the trained multi-layer networks to represent features of the images, and
- applying a statistical classifier to this set of extracted features to correctly classify the images.

According to another aspect of the present invention a method for automatically extracting features from images is proposed, the method comprising the following steps:

- training a neural system to achieve a low classification rate on a set of pre-defined images,
- extracting the hidden nodes from all hidden layers of the trained neural systems to represent features of the images,
- pruning the hidden nodes by a method a set forth before and an appropriate contribution to activation algorithm, and
- applying a statistical classifier to this set of extracted features to correctly classify the images.

The measurement of the activation of the relevant output node with and without the hidden node can be used as the contribution to activation algorithm.

The measurement of the correlation between input and output can be used as the contribution to activation algorithm.

An co-evolutionary algorithm can be used as the contribution to activation algorithm.

The neural system can consist of one single or multi-layer neural network.

The neural system can consist of an ensemble of single or multi-layer neural networks.

The neural system can consist of an ensemble of single or multi-layer neural networks and that the ensemble of neural networks is trained using a combination of mean-squared error and negative correlation learning.

Further advantages, features and objects will become evident for the man skilled in the art when reading the following detailed description of an embodiment taken in conjunction with the figures of the enclosed drawings.

Figure 1    illustrates schematically the steps for a nonlinear feature extraction according to the present invention,

Figure 2    visualizes on of the steps of Figure 1 in greater detail, i.e. the selection process for optimal nodes and their application as feature-detecting, and

Figure 3    shows a comparison between testing performance on single networks and ensemble networks and on the hidden node extraction architecture for single networks and ensemble networks which is the subject of this invention, varying the number of hidden nodes per network.

### *Detailed Description of* an *Embodiment of the invention*

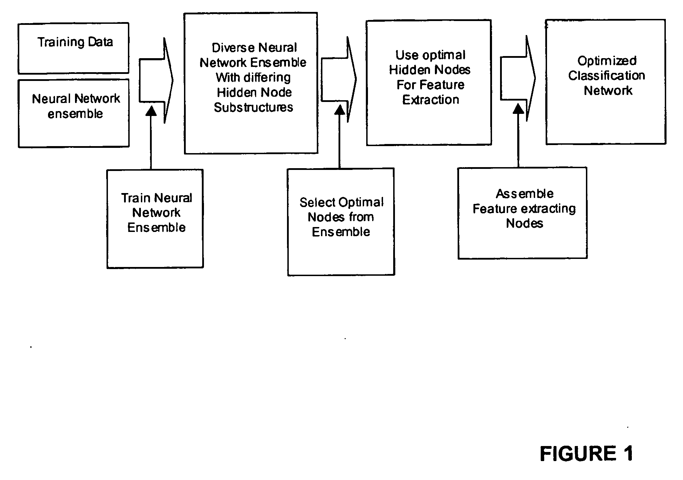

The invention proposes a method for nonlinear feature extraction based on neural network ensembles. In a schematical view, the method consists of the following three steps which are visualized in Figure 1.

The first step is to train an ensemble of neural networks on a particular pattern recognition task using training data and one of the ensemble training methods mentioned above. The ensemble training ensures a higher degree of diversity in the internal representations of the ensemble of networks, compared to independent training. This first step generates a diverse neural network ensemble with differing hidden node substructures.

In the second step the hidden nodes of all networks in the ensemble are evaluated according to their contribution to the correct classification performance of the ensemble. The optimally contributing nodes are selected from the networks and are used as independent substructures for non-linear feature extraction.

Step three therefore consists of assembling this set of optimal feature extracting nodes (detectors) parallely to obtain a feature representation with high dimension reduction of the input. This dimensionally reduced representation of the patterns can be used for building a new classifier with improved performance and generalization.

### Algorithm for Selecting Optimal Nodes

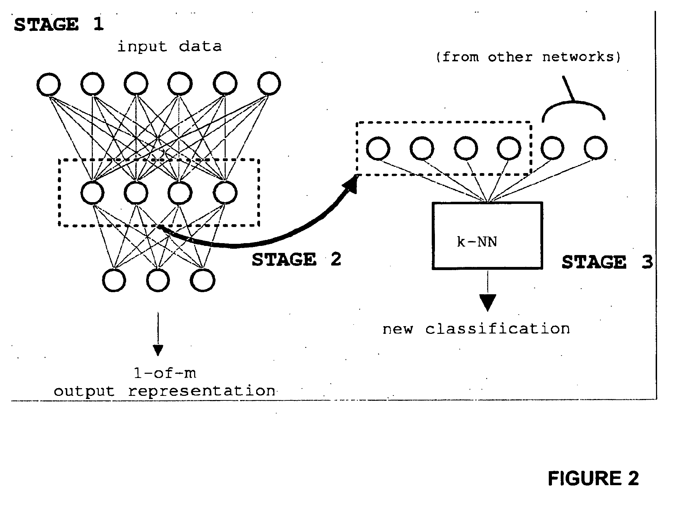

Figure 2 visualizes in greater detail the above step 2 and thus the selection process for optimal nodes and their application as feature-detecting units for a standard k-Nearest Neighbour (k-NN) classifier. The k-NN classifier can be replaced by any other classification architecture. Subsets of networks and hidden nodes that may be redundant are selectively pruned. In this way the input dimensionality for the k-NN classifier can be reduced. The pruning occurs at step 2, as illustrated in the above Figure 1, after an ensemble of neural networks is trained with training data. The following algorithm is applied:

```
for each output class c
 pick candidate net(s) with low Mean Squared Error (MSE)
 for each candidate network
   identify nodes with high contribution
 endfor
```

```
add hidden nodes to feature set
endfor
```

For each class first one or more candidate networks are identified that may be useful for correct classification - usually the networks with lowest MSE on instances of this class are chosen. This has the effect of pruning away any networks which have an adverse effect on the overall ensemble performance. Next hidden nodes within this set of candidates are identified that contribute most to the ensemble performance - termed the *contribution to activation.* This is done by noting the activation of the relevant output node, with and without each hidden node. The nodes which cause the largest change in activation are selected as useful for classification.

At the end of this process, a subset of the hidden nodes from various networks in the ensemble is selected.

Note that many potential contribution-to-activation algorithms can be used here. One alternative approach is to measure the correlation between the inputs and outputs of the hidden nodes - this would be a non-linear, non-monotonic correlation, which would require careful consideration.

Another alternative approach is to allow a co-evolutionary algorithm to identify nodes.

### Results - Comparison between different network sizes and standard methods

The dataset used is based on the first 20 objects from the COIL-100 database. Previous work by Wersing and Korner [8] investigated how a hierarchy of biologically inspired feature detectors can create a useful re-representation of raw image data.

The input to the hierarchy is the original grayscale image data, 128 by 128 pixels. The first stage of processing applies Gabor filters at four orientations, followed by spatial pooling, producing four images of 16 by 16 pixels - a vector of length 1024, the 'C1' data. The second stage applies the technique of sparse invariant feature decomposition, producing fifty 8 by 8 images, so a vector of length 3200 - this is the 'C2' data. This is then used in a classification technique such as k-Nearest Neighbour. This architecture demonstrated very good performance, attributed to the feature detectors being localized to particular portions of the image. The disadvantage lies in the large amount of time spent on design and tuning of various parameters, including the connection patterns and size of localised fields. A large portion of the design step can be removed by automatically encouraging specialisation to features within the image. A classification on our re-representation from the C1 data and comparison with the same classification technique on the C2 data has been performed.

The C1 data was rescaled to be between 0 and 1. Each object has 72 views at rotations of 5 degrees - 4 views were used for training, and 68 for testing. A standard backpropagation with a learning rate of 0.1 was used. Training was stopped when the reduction in MSE was less than $10^{-5}$, over the previous 25 iterations. Departing from random initial weights 100 trials of each experiment were performed.

For comparison standard MLPs were used to classify the data, with three experimental set-ups. The first set-up was a single MLP, where the number of hidden nodes was varied, which is labelled "SingleNet". The second was an ensemble of 3 networks, and again the number of hidden nodes per network was varied, which is labelled "Smallscale". The third was an ensemble of networks each with 30 hidden nodes, where the number of networks was varied, which is labelled "Largescale".

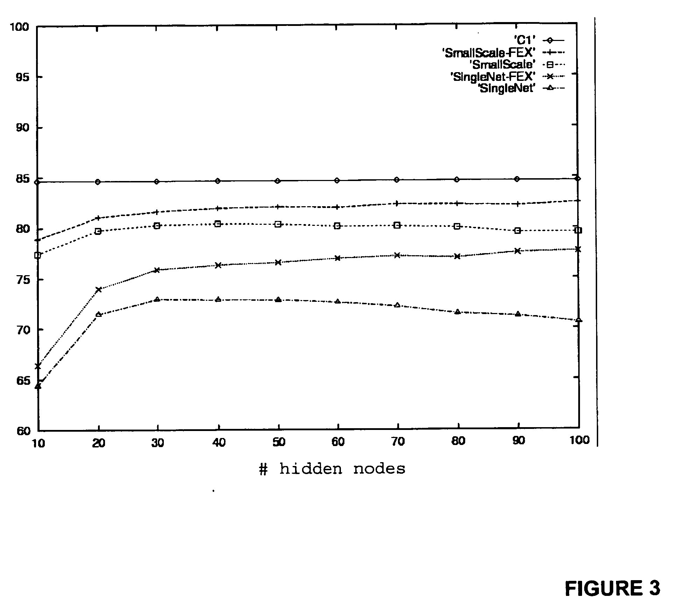

Figure 3 shows a comparison between testing performance on single networks and ensemble networks and on the hidden node extraction architecture for single networks and ensemble networks which is the subject of the present invention (name ending FEX (for feature extraction) in the figure), varying the number of hidden nodes per network. The features extracted from the "SmallScale" ensemble (100 hidden nodes in each of 3 nets) obtained 82.5% (over 100 trials). Feature extraction from a single network with 90 hidden nodes obtained 77.5%, while using an ensemble with 3 nets each with 30 hidden nodes obtained 81.6% - clearly showing the advantage of extracting hidden nodes from an ensemble rather than a single network.

### Claims

1. A method for automatically extracting features from images, the method comprising the following steps:

   - training a neural system to achieve a low classification error rate on a set of pre-defined images, the neural system consisting of an ensemble of neural networks, comprising multi-layer networks, the training resulting in a diverse neural network ensemble with differing hidden nodes of the multi-layer networks,
   - extracting the hidden nodes from all hidden layers of the trained multi-layer networks to represent features of the images, and
   - applying a statistical classifier to this set of extracted features to correctly classify the images.

**2.** The method for automatically extracting features from images according to claim 1, comprising the step of:

- pruning the extracted hidden nodes by means of a contribution to activation algorithm.

**3.** The method according to claim 2,
**characterized in that**
the following contribution-to-activation algorithm is used:

- measure the activation of the relevant output node with and without the hidden node.

**4.** The method according to claim 2,
**characterized in that**
the following contribution-to-activation algorithm is used:

- measure the correlation between input and output.

**5.** The method according to claim 2,
**characterized in that**
a co-evolutionary algorithm is used as contribution-to-activation algorithm.

**6.** The method according to anyone of the preceding claims,
**characterized in that**
the neural system consists of one single or multi-layer neural network.

**7.** The method according to anyone of the preceding claims,
**characterized in that**
the neural system consists of an ensemble of single or multi-layer neural networks.

**8.** The method according to anyone of the preceding claims,
**characterized in that**
the ensemble of neural networks is trained using a combination of mean-squared error and negative correlation learning.

**9.** Computer program product,
implementing a method according to anyone of the preceding claims when running on a computing device.

**10.** Recording medium,
having recorded thereon a product according to claim 9.

**11.** A system for automatically extracting features from images, the system comprising:

- means for training a neural system to achieve a low classification error rate on a set of pre-defined images, the neural system consisting of an ensemble of neural networks, comprising multi-layer networks, the training resulting in a diverse neural network ensemble with differing hidden nodes of the multi-layer networks,
- means for extracting the hidden nodes from all hidden layers of the trained multi-layer networks to represent features of the images, and
- means for applying a statistical classifier to this set of extracted features to correctly classify the images.

**12.** A system for automatically extracting features from images according to claim 11, the system furthermore comprising:

- means for pruning the extracted hidden nodes for example by executing a contribution to activation algorithm.

**Patentansprüche**

**1.** Verfahren zum automatischen Extrahieren von Charakteristika aus Bildern, wobei das Verfahren Folgende Schritte aufweist:

- Trainieren eines neuronalen Systems, um bei einem Satz von vordefinierten Bildern eine niedrige Klassifizierungsfehlerrate zu erreichen,

wobei das neuronale System aus einem Ensemble von neuronalen Netzen, die mehrschichtige Netze aufweisen, besteht,
wobei das Trainieren in einem verschiedenartigen neuronalen Netz-Ensemble mit sich unterscheidenden versteckten Knoten der mehrschichtigen Netze resultiert,

- Extrahieren der versteckten Knoten aus allen versteckten Schichten der trainierten mehrschichtigen Netze, um Charakteristika der Bilder darzustellen, und
- Anwenden eines statistischen Klassifizierers auf diesen Satz von extrahierten Charakteristika, um die Bilder korrekt zu klassifizieren.

2. Verfahren zum automatischen Extrahieren von Charakteristika aus Bildern nach Anspruch 1, mit folgendem Schritt:

- Streichen der extrahierten versteckten Knoten mittels eines Beitrag-zur-Aktivierung-Algorithmus.

3. Verfahren nach Anspruch 2,
**dadurch gekennzeichnet,**
**dass** der folgende Beitrag-zur-Aktivierung-Algorithmus verwendet wird:

- Messen der Aktivierung des relevanten Ausgabeknotens mit dem und ohne den versteckten Knoten

4. Verfahren nach Anspruch 2,
**dadurch gekennzeichnet,**
**dass** der folgende Beitrag-zur-Aktivierung-Algorithmus verwendet wird:

- Messen der Korrelation zwischen Eingabe und Ausgabe.

5. Verfahren nach Anspruch 2,
**dadurch gekennzeichnet,**
**dass** ein koevolutionärer Algorithmus als Beitrag-zur-Aktivierung-Algorithmus verwendet wird.

6. Verfahren nach einem der vorhergehenden Ansprüche,
**dadurch gekennzeichnet,**
**dass** das neuronale System aus einem einzelnen oder einem mehrschichtigen neuronalen Netz besteht.

7. Verfahren nach einem der vorhergehenden Ansprüche,
**dadurch gekennzeichnet,**
**dass** das neuronale System aus einem Ensemble von einzelnen oder mehrschichtigen neuronalen Netzen besteht.

8. Verfahren nach einem der vorhergehenden Ansprüche,
**dadurch gekennzeichnet,**
**dass** das Ensemble von neuronalen Netzen unter Verwendung einer Kombination eines mittleren quadratischen Fehlers und eines Lernens mit negativer Korrelation trainiert wird.

9. Computerprogrammprodukt,
das ein Verfahren nach einem der vorhergehenden Ansprüche implementiert, wenn dasselbe auf einer Rechenvorrichtung läuft.

10. Aufzeichnungsmedium,
auf dem ein Produkt nach Anspruch 9 aufgezeichnet ist.

11. System zum automatischen Extrahieren von Charakteristika aus Bildern, wobei das System folgende Merkmale aufweist:

- eine Einrichtung zum Trainieren eines neuronalen Systems, um bei einem Satz von vordefinierten Bildern eine niedrige Klassifizierungsfehlerrate zu erreichen,

wobei das neuronale System aus einem Ensemble von neuronalen Netzen, die mehrschichtige Netze aufweisen, besteht,
wobei das Trainieren in einem verschiedenartigen neuronalen Netz-Ensemble mit sich unterscheidenden versteckten Knoten der mehrschichtigen Netze resultiert,

- eine Einrichtung zum Extrahieren der versteckten Knoten aus allen versteckten Schichten der trainierten mehrschichtigen Netze, um Charakteristika der Bilder darzustellen, und
- eine Einrichtung zum Anwenden eines statistischen Klassifizierers auf diesen Satz von extrahierten Charakteristika, um die Bilder korrekt zu klassifizieren.

**12.** System zum automatischen Extrahieren von Charakteristika aus Bildern nach Anspruch 11, wobei das System ferner folgende Merkmale aufweist:

- eine Einrichtung zum Streichen der extrahierten versteckten Knoten durch beispielsweise Ausführen eines Beitrag-zur-Aktivierung-Algorithmus.

**Revendications**

**1.** Procédé pour extraire automatiquement des caractéristiques d'images, le procédé comprenant les étapes consistant à :

- former un système neuronal à obtenir un taux d'erreur de classification faible sur une série d'images prédéfinies, le système neuronal consistant en un ensemble de réseaux neuronaux, comprenant des réseaux multicouches, la formation résultant en un ensemble de divers réseaux neuronaux avec différents noeuds cachés des réseaux multicouche,
- extraire les noeuds cachés de toutes les couches cachées des réseaux multicouches formés afin de représenter les caractéristiques des images, et
- appliquer un classifieur statistique à cette série de caractéristiques extraites afin de classifier correctement les images.

**2.** Procédé pour extraire automatiquement des caractéristiques d'images selon la revendication 1, comprenant l'étape consistant à :

- élaguer les noeuds cachés extraits au moyen d'un algorithme de contribution à l'activation.

**3.** Procédé selon la revendication 2, **caractérisé en ce que** l'algorithme de contribution à l'activation suivant est utilisé :

- mesurer l'activation du noeud de sortie approprié avec et sans le noeud caché.

**4.** Procédé selon la revendication 2, **caractérisé en ce que** l'algorithme de contribution à l'activation suivant est utilisé :

- mesurer la corrélation entre l'entrée et la sortie.

**5.** Procédé selon la revendication 2, **caractérisé en ce qu'**un algorithme de coévolution est utilisé comme algorithme de contribution à l'activation.

**6.** Procédé selon l'une quelconque des revendications précédentes, **caractérisé en ce que** le système neuronal consiste en un réseau neuronal mono ou multicouche.

**7.** Procédé selon l'une quelconque des revendications précédentes, **caractérisé en ce que** le système neuronal consiste en un ensemble de réseaux neuronaux mono ou multicouche.

**8.** Procédé selon l'une quelconque des revendications précédentes, **caractérisé en ce que** l'ensemble de réseaux neuronaux est formé à l'aide d'une combinaison d'apprentissage de corrélation négative et d'erreur quadratique moyenne.

**9.** Produit de programme informatique, implémentant un procédé selon l'une quelconque des revendications précédentes lors de son lancement sur un dispositif informatique.

10. Support d'enregistrement possédant enregistré sur lui un produit selon la revendication 9.

11. Système pour extraire automatiquement des caractéristiques d'images, le système comprenant :

- un moyen pour former un système neuronal à obtenir un taux d'erreur de classification faible sur une série d'images prédéfinies,
le système neuronal consistant en un ensemble de réseaux neuronaux, comprenant des réseaux multicouches,
la formation résultant en un ensemble de divers réseaux neuronaux avec différents noeuds cachés des réseaux multicouche,
- un moyen pour extraire les noeuds cachés de toutes les couches cachées des réseaux multicouches formés afin de représenter les caractéristiques des images, et
- un moyen pour appliquer un classifieur statistique à cette série de caractéristiques extraites afin de classifier correctement les images.

12. Système pour extraire automatiquement les caractéristiques d'images selon la revendication 11, le système comprenant en outre :

- un moyen pour élaguer les noeuds cachés extraits par exemple en exécutant un algorithme de contribution à l'activation.

| Training Data |
| Neural Network ensemble |

→

| Diverse Neural Network Ensemble With differing Hidden Node Substructures |

→

| Use optimal Hidden Nodes For Feature Extraction |

→

| Optimized Classification Network |

| Train Neural Network Ensemble |

| Select Optimal Nodes from Ensemble |

| Assemble Feature extracting Nodes |

**FIGURE 1**

**STAGE 1**

input data

(from other networks)

STAGE 2

STAGE 3

k-NN

new classification

1-of-m
output representation

**FIGURE 2**

**FIGURE 3**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- DE 10048308 A1
- US 5926804 A

### Non-patent literature cited in the description

- **A. SHARKEY.** Multi-Net Systems, chapter Combining Artificial Neural Nets. *Ensemble and Modular Multi-Net Systems,* 1999, 1-30
- **T.G. DIETTERICH.** Ensemble methods in machine learning. *Proceedings of 1st Int. Workshop on Multiple Classifier Systems,* 2000, 1-15
- **S.GEMAN ; E. BIENENSTOCK ; R. DOURSAT.** Neural networks and the bias/variance dilemma. *Neural Computation,* 1992, vol. 4, 1-58
- **A. KROGH ; J. VEDELSBY.** Neural network ensembles, cross validation and active learning. *NIPS,* 1995, vol. 7
- **N.UEDA ; R.NAKANO.** Generalisation error of ensemble estimators. *ICNN96,* 1996, 90-95
- **D.OPITZ ; J.SHAVLIK.** Generate accurate and diverse members of a neural network ensemble. *NIPS,* 1996, vol. 8
- **Y.LIU.** Negative Correlation Learning and Evolutionary Neural Network Ensembles. *PAD Thesis,* 1998
- **H.WERSING ; E.KORNER.** Unsupervised learning of combination features for hierarchical recognition models. *ICANN,* 2002, vol. 2002
- **M. KENDALL.** Multivariate Analysis. *Charles Griffin&Co.,* 1975
- **P. COMON.** Independent Component Analysis - A New Concept ?. *Signal Processing,* 1994, vol. 36, 287-314